# EUROPEAN PATENT SPECIFICATION

(11) **EP 1 013 177 B1**
(45) Date of publication and mention of the grant of the patent: **03.09.2003**
(21) Application number: 98204369.7
(22) Date of filing: 22.12.1998
(51) Int. Cl.: A23L 1/231, A23L 1/226, A23K 1/18

(54) **A game-type flavouring agent.**
Aromastoff mit einer Wildnote
Agent arômatisant de type gibier

(43) Date of publication of application: 28.06.2000
(73) Proprietor: SOCIETE DES PRODUITS NESTLE S.A., 1800 Vevey (CH)
(72) Inventor: Blank, Imre, 1073 Savigny (CH); Cerny, Christoph, 8400 Winterthur (CH); Devaud, Stephanie, 1699 Porsel (CH); Heyland, Sven, 8532 Weiningen (CH)
(74) Representative: Vuille, Roman

(56) References cited:
- EP-A- 0 110 362
- US-A- 3 922 367
- J.M.BAKKE ET AL.: "Volatile compounds from the red deer (Cervus elaphus)Secretion from the tail gland" JOURNAL OF CHEMICAL ECOLOGY, vol. 9, no. 4, 1983, pages 513-520, XP002106231
- CHEMICAL ABSTRACTS, vol. 74, no. 2, 11 January 1971 Columbus, Ohio, US; abstract no. 9428, N.G.NORMAN: "Analysis of naphthenic acid by gas-liquid chromatography" XP002106233 & J.PAINT TECHNOL., vol. 42, no. 548, 1970, pages 504-509,
- CHEMICAL ABSTRACTS, vol. 114, no. 5, 4 February 1991 Columbus, Ohio, US; abstract no. 39742, J.M.BAKKE ET AL.: "Volatile compounds from the red deer (Cervus elaphus).Substances secreted via the urine" XP002105529 & COMP.BIOCHEM<.PHYSIOL.,A:COMP.PHYSIOL., vol. 97A, no. 3, 1990, pages 427-431,
- J.C.LEFFINGWELL ET AL.: "Tobacco flavoring for smoking products" 1972 , R.JREYNOLDS TOBACCO , WINSTON-SALEM,N.C. XP002106232 page 11 * Table I,last line*
- B.LOSER WT R.A.FORD: "Recent progress in the consideration of flavoring ingredients under the Food Addititives Amendment 11.GRAS Substances" FOOD TECHNOLOGY., vol. 32, no. 2, February 1978, XP002105528 CHICAGO US
- J.KIM HA ET R.C.LINDSAY: "Volatile alkylphenols and thiophenol in species-related characterizing flavors of red meats" JOURNAL OF FOOD SCIENCE., vol. 56, no. 5, 1991, pages 1197-1202, XP002105527 CHICAGO US

## Description

### Field of the invention

This invention relates to a flavouring agent intended for enhancing or imparting game-type flavour in food products.

### Background of the invention

Meat-like flavourings and their method of preparation are well known. They can be produced by a thermal reaction between the free amino groups of amino acids and/or of peptides, and the carbonyl groups of reducing sugars, for example. The combination of flavour molecules in the right proportions and the resulting mixtures represent another possibility to produce meat-like flavours. These preparations are also known as "compounded flavours". A combination of both approaches can also be applied to produce meat-like flavours.

Compounds responsible for meat flavour in food products and commonly used in compounded flavours are for example furfurylthiol, 2,5-dimethyl-4-hydroxy-3(2*H*)-furanone, methional, 2,3-diethyl-5-methylpyrazine, 2-methyl-3-furanthiol, furfural, 3-mercapto-2-butanone, maltol, sotolone, abhexone, butyric acid, diacetyl, 2,3-pentandione.

J.M. Bakke et al. in *Journal of Chemical Ecology,* 1983, vol. 9, no. 4, p. 513-520 and in *Comp. Biochem. Physiol., A: Comp. Physiol*., 1990, vol. 97A, no. 3, p. 427-431, identified alkyl phenols and cyclohexanecarboxylic acid or derivatives as volatile compounds secreted by the tail gland of the red deer.

N.G. Norman in *J. Paint. Technol*., 1970, vol. 42, no. 548, p. 504-509, identified isobutyric acid, m- and p-cresol, heptanoic acid, octanoic acid, cyclohexanecarboxylic acid, etc, as volatile components of crude Aruba naphthenic acid by gas chromatography.

However, game-type flavouring compounds have not been described yet.

### Summary of the invention

This invention provides a flavouring agent intended for enhancing or imparting game-type flavour in food products, comprising a combination of an alkylphenol and cyclohexanecarboxylic acid or an alkyl-substituted derivative thereof.

Although Cyclohexanecarboxylic acid is known as a flavour compound, it has not been described as useful in meat-like or game flavours. Although alkylphenols are compounds widely found in nature, there is no evidence however that cyclohexanecarboxylic acid or p-cresol and its isomers are particularly useful to achieve game type flavour notes. Nor are there any indications that the combination of both compounds might be useful to achieve this goal.

To obtain a specific game-type flavour, these two flavour compounds are combined in a specific ratio (alkylphenol : cyclohexanecarboxylic acid) of 1:1 to 20:1 by weight.

The flavouring agent may also contain a source of short chain alkyl acids, which contribute to reinforce sweaty and animal-like notes to the overall flavour of said flavouring agent. It can also contain phenylacetic acid to further enhance the animal-like note.

Thus, the flavouring agent is intended to give culinary products an authentic game-specific flavour note without using any meat extract. It can also be used to provide a game-specific flavour note in petfoods.

Another aspect of the present invention is the use of this flavouring agent in flavour blends or in any process for the preparation of game-flavoured products.

### Detailed description of the invention

In the specification, all percentages are given on the basis of weight except where specifically stated otherwise. Also the term flavour comprises odour, aroma or taste.

The flavouring agent comprises a combination of an alkylphenol and cyclohexanecarboxylic acid or its alkyl-substituted derivatives, mixed in a ratio of 1:1 to 20:1 by weight and preferably in a ratio of about 6:1.

The alkyl group of alkyl-substituted derivative of cyclohexanecarboxylic acid can be methyl, ethyl or propyl, for example, located in position 2-, 3-, or 4 of the cycle. The alkyl-substituted derivative can be cis- or trans isomer or mixtures thereof.

The alkylphenol may be one of the three isomer ortho, meta or para of cresol, ethylphenol or propylphenol.

In a preferred embodiment the flavouring agent may also contain one or more of the following compounds:
- a source of short chain alkyl acids
- a source of phenylacetic acid

Short chain alkyl acids are preferably those containing 4 to 6 carbons such as butyric and isovaleric acid. They can be added in an amount of about 80 to 99.9 % and preferably at 99.5 %. Phenylacetic acid may be added in an amount of about 0.4 % to 15 %.

The flavouring agent can be prepared by mixing its constitutive compounds. The obtained mixture may be in a liquid or dried form.

In a prefered embodiment, the liquid flavouring agent may contain p-cresol and cyclohexanecarboxylic acid in a ratio of 1:1 to 20:1. The ratio of the mixture p-cresol + cyclohexanecarboxylic acid to other acids is preferably 0.2:99.8 and 20:80.

The dried flavouring agent can be prepared by mixing about 1 to 10 % of the liquid flavouring agent with about 15 to 40 % of maltodextrin and 1 to 5 % gum arabic in 50 to 80 % of water. The obtained mixture is then spray dried preferably to a dry content of about 98 %. The dried composition may thus contain 0.01 to 2 % of p-cresol and 0.0005 to 2% cyclohexanecarboxylic acid.

In a preferred embodiment, the flavouring agent may have an agouti-flavour note. Accordingly, the flavouring agent may have the following composition (Table 1).

**Table 1**

| Composition of an agouti-type flavouring agent | |
|---|---|
| Compound | Composition in % |
| Butyric acid | 45-75 |
| Isovaleric acid | 22-42 |
| Phenylacetic acid | 0-3 |
| p-Cresol/Cyclohexanecarboxylic acid (ratio 1:1 to 20:1) | 0.1-10 |
| | |
| **Total** | **100** |

Thus, the flavouring agent is intended to give an authentic game meat-specific aroma note to culinary products. It can also be used to provide a game-specific aroma note in petfoods.

It can be used directly in its liquid or dried form so as to enhance or impart game-type flavour in culinary products. The amount of the liquid form is preferably of about 0.05 to 5 g per kg of culinary product or petfood product and depending on the requisite degree of aroma. The dried form of the flavouring agent can be used in an amount of 0.2-50 g per kg.

Another aspect of the present invention is the use of this agent in any process for the preparation of game-flavoured food products.

Accordingly, the flavouring agent may be used in a process where cystein and/or thiamine, a reducing sugar and a plant protein hydrolysate can be used for the basic meat-flavor. The amount of added flavouring agent may be at least of about 0.1% and its concentration in the final culinary product or pet food product is preferably at least 1 mg/kg. After the thermal flavour reaction which is preferably carried out in a stirred reactor with temperature control, the flavouring agent is added, either in its liquid or dried form, the resulting mixture is homogenised and dried in a vacuum oven.

The following examples are given by way of illustration only and in no way should be construed as limiting the subject matter of the present application.

### Examples

### Example 1: Preparation of an agouti-type flavouring agent

A liquid agouti flavouring agent is prepared by mixing:

| | |
|---|---|
| 65% | butyric acid |
| 33% | isovaleric acid |
| 1.06% | phenylacetic acid |
| 0,84% | p-cresol |
| 0.1% | cyclohexanecarboxylic acid |

100 mg of the mixture is then diluted in 1 L hot water to evaluate the flavour. It has a very authentic smell and taste of agouti.

A dried form of the flavouring agent is obtained by mixing 2 g of the liquid flavouring agent, 32 g of maltodextrin, 6 g gum arabic and 60 g of water. The mixture is then spray-dried up to an amount of 2 % of humidity.

### Example 2: Preparation of an agouti flavouring composition

In order to prepare a flavouring composition, the following ingredients arc mixed :

| | |
|---|---|
| Hydrolysed plant protein | 45% |
| Water | 45% |
| IMP | 4% |
| Cystein HCl | 0.75% |
| Thiamin | 0.75% |
| Xylose | 1.5% |
| Beef fat | 2.75% |
| Onion extract | 0.25% |

The mixture is then submitted to a browning reaction in an autoclave at a temperature of about 105°C during about 2 hours. 1% of the liquid agouti flavouring agent, as obtained in example 1, is added. The obtained mixture is dried by means of a vaccum oven.

The resulting powder can be used directly in water to prepare a bouillon or to enhance agouti-flavor in culinary products.

### Example 3 : Agouti flavoured bouillon

10 g of the flavouring composition obtained in example 2 is dissolved in 1 L of hot water.

The solution has an authentic agouti flavour as perceived by smelling and tasting the sample.

### Example 4 : Bouillon with agouti flavour

A mixture of 370 g of maltodextrin, 190 g of salt, 100 g of yeast extract, 90 g of dextrose, 80 g of starch, 65 g beef fat, 40 g of sugar, 2 g citric acid and various condiments is prepared.

19 g of this mixture, 1 g of salt and 1 g of the spray-dried agouti flavouring agent obtained as described in example I are added to 1 L of hot water.

The bouillon obtained has a specific agouti flavour as perceived by smelling and tasting the sample.

### Example 5 : Game-flavoured petfood preparation

A mixture is prepared from 73 % of poultry carcass, pig lungs and beef liver (ground), 16 % of wheat flour, 7 % of water, 2 % of dyes, 0.2 % of liquid agouti flavouring as prepared in example 1, vitamins, and inorganic salts. This mixture is emulsified at 12°C and extruded in the form of a pudding which is then cooked at a temperature of 90°C. It is cooled to 30°C and cut in chunks. 45 % of these game flavoured chunks are mixed with 55 % of a sauce prepared from 98 % of water, 1 % of dye and 1 % of guar gum. Tinplate cans are filled and sterilized at 125°C for 40 min.

This petfood has a pleasant game flavour as perceived by smelling the sample.

## Claims

1. A flavouring agent intended for enhancing or imparting game-type flavour in food products, said composition comprising a combination of an alkylphenol and cyclohexanecarboxylic acid or an alkyl-substituted derivative thereof,
wherein the ratio alkylphenol : cyclohexanecarboxylic acid is 1:1 to 20:1 by weight

2. A flavouring agent according to claim 1, wherein the alkylphenol is a para, ortho or meta isomer of cresol, ethylphenol or propylphenol.

3. A flavouring agent according to any of claims 1 or 2, which contains a source of short chain alkyl acids.

4. A flavouring agent according to any of claims 1 to 3, which contains phenylacetic acid.

5. A flavouring agent according to any of claims 1 to 4, with an agouti-flavour which contains:
- 0.1 to 10 % by weight of cyclohexanecarboxylic acid and p-cresol, the ratio p-cresol : cyclohexanecarboxylic acid being 1:1 to 20:1 by weight;
- 45 to 75 % by weight butyric acid;
- 22 to 42 % by weight isovaleric acid;
- and up to 3 % by weight of phenylacetic acid.

6. The use of a flavouring agent comprising a combination an alkylphenol and cyclohexanecarboxylic acid or an alkyl-substituted derivative thereof for the preparation of a game flavouring composition which contains at least 0.1 % by weight of said flavouring agent.

7. The use according to claim 6, wherein the ratio alkylphenol : cyclohexanecarboxylic acid is 1:1 to 20:1 by weight.

8. The use according to claim 6 or 7, wherein the game flavouring composition contains at least 0.1 % by weight of the flavouring agent in a culinary product

## Patentansprüche

1. Aromastoff, der dazu bestimmt ist, in Nahrungsmitteln das Wildaroma zu verstärken oder ihnen ein solches zu verleihen, wobei die genannte Zusammensetzung eine Kombination aus einem Alkylphenol und aus Cyclohexancarbonsäure oder einem Alkyl-substituierten Derivat davon umfaßt, wobei das Gewichtsverhältnis Alkylphenol:Cyclohexancarbonsäure von 1:1 bis 20:1 beträgt.

2. Aromastoff nach Anspruch 1, wobei das Alkylphenol ein para-, ortho- oder meta-Isomer von Kresol, Ethylphenol oder Propylphenol ist.

3. Aromastoff nach irgendeinem der Ansprüche 1 oder 2, der eine Quelle für kurzkettige Alkylsäuren enthält.

4. Aromastoff nach irgendeinem der Ansprüche 1 bis 3, der Phenylessigsäure enthält.

5. Aromastoff nach irgendeinem der Ansprüche 1 bis 4, der ein Agutiaroma aufweist, der enthält:
- 0,1 bis 10 Gew.-% Cyclohexancarbonsäure und p-Kresol, wobei das Gewichtsverhältnis p-Kresol: Cyclohexancarbonsäure von 1:1 bis 20:1 beträgt;
- 45 bis 75 Gew.-% Buttersäure;
- 22 bis 42 Gew.-% Isovaleriansäure;
- und bis zu 3 Gew.-% Phenylessigsäure.

6. Verwendung eines Aromastoffs, der eine Kombination aus einem Alkylphenol und Cyclohexancarbonsäure oder einem Alkyl-substituierten Derivat davon umfaßt, zur Herstellung einer Wildaroma-Zusammensetzung, die wenigstens 0,1 Gew.-% des genannten Aromastoffs enthält.

7. Verwendung nach Anspruch 6, wobei das Gewichtsverhältnis Alkylphenol:Cyclohexancarbonsäure von 1:1 bis 20:1 beträgt.

8. Verwendung nach Anspruch 6 oder 7, wobei die Wildaroma-Zusammensetzung wenigstens 0,1 Gew.-% des Aromastoffs in einem kulinarischen Produkt enthält.

## Revendications

1. Agent aromatisant destiné à accroître ou conférer un arôme de gibier dans des produits alimentaires, ladite composition comprenant une association d'un alkylphénol et d'acide cyclohexanecarboxylique ou d'un de ses dérivés à substituant alkyle, le rapport alkylphénol : acide cyclohexanecarboxylique étant compris dans l'intervalle de 1 : 1 à 20 : 1 en poids.

2. Agent aromatisant suivant la revendication 1, dans lequel l'alkylphénol est un isomère para, ortho ou méta du crésol, de l'éthylphénol ou du propylphénol.

3. Agent aromatisant suivant l'une quelconque des revendications 1 et 2, qui contient une source d'acides alkyliques à chaîne courte.

4. Agent aromatisant suivant l'une quelconque des revendications 1 à 3, qui contient de l'acide phénylacétique.

5. Agent aromatisant suivant l'une quelconque des revendications 1 à 4, à arôme d'agouti, qui contient :
- 0,1 à 10 % en poids d'acide cyclohexanecarboxylique et de p-crésol, le rapport p-crésol : acide cyclohexanecarboxylique étant compris dans l'intervalle de 1 : 1 à 20 : 1 en poids ;
- 45 à 75 % en poids d'acide butyrique ;
- 22 à 42 % en poids d'acide isovalérique ;
- et jusqu'à 3 % en poids d'acide phénylacétique.

6. Utilisation d'un agent aromatisant comprenant une association d'un alkylphénol et d'acide cyclohexanecarboxylique ou d'un de ses dérivés à substituant alkyle pour la préparation d'une composition aromatisante au gibier qui contient au moins 0,1 % en poids dudit agent aromatisant.

7. Utilisation suivant la revendication 6, dans laquelle le rapport alkylphénol : acide cyclohexanecarboxylique est compris dans l'intervalle de 1 : 1 à 20 : 1 en poids.

8. Utilisation suivant la revendication 6 ou 7, dans laquelle la composition aromatisante au gibier contient au moins 0,1 % en poids de l'agent aromatisant dans un produit culinaire.
